# EUROPÄISCHE PATENTSCHRIFT

(11) **EP 1 637 503 B1**
(45) Veröffentlichungstag und Bekanntmachung des Hinweises auf die Patenterteilung: **19.05.2010**
(21) Anmeldenummer: 05019087.5
(22) Anmeldetag: 02.09.2005
(51) Int. Cl.: C01G 53/00, H01M 4/52

(54) **Mischmetallhydroxide, deren Herstellung und Verwendung**
Mixed metal hydroxides, production and use thereof
Hydroxydes métalliques mixtes, procédé pour leur préparation et utilisation

(30) Priorität: 15.09.2004 DE 102004044557
(43) Veröffentlichungstag der Anmeldung: 22.03.2006
(73) Patentinhaber: Toda Kogyo Europe GmbH, 40210 Düsseldorf (DE)
(72) Erfinder: Albrecht, Sven, Dr., 38642 Goslar (DE); Kruft, Michael, Dr., Brights Grove ON N0N 1C0 (CA); Olbrich, Armin, Dr., 38723 Seesen (DE); Malcus, Stefan, Dr., 44866 Bochum (DE); Wiezoreck, Wolfgang, 95100 Selb (DE); McLeod, Trevor, Sarnia ON N7S 6J6 (CA); Siddiqui, Shuja, Sarnia ON N7S 5G6 (CA); Rops, Rob, Petrolia ON N0N 1R0 (CA); Hori, Hirofumi, Ibaraki,311-4146 (JP)
(74) Vertreter: Woods, Geoffrey Corlett

(56) Entgegenhaltungen:
- EP-A- 0 918 041
- EP-A- 1 044 927
- US-A1- 2002 110 518
- US-B1- 6 207 325

## Beschreibung

Die Erfindung betrifft pulverförmiges Mischmetallhydroxid auf Basis der Metalle Nickel, Kobalt und Aluminium, wobei die Pulverpartikel einen Kern aus Nickel-Kobalt-Hydroxid aufweisen, auf dessen Oberfläche amorphes Aluminiumhydroxid abgeschieden ist. Die Erfindung betrifft weiterhin ein Verfahren zur kontinuierlichen Herstellung solcher Misehmetallhydroxide durch Fällung von Aluminiumhydroxid in Gegenwart eines Nickel-Kobalt-Mischhydroxids in einem Rohrreaktor und die Verwendung der Mischmetallhydroxide zur Herstellung von Aktivmaterialien für positive Elektroden einer Sekundärbatterie.

Bedingt durch die immer weiter fortschreitende Miniaturisierung tragbarer elektronischer Geräte, ist der Bedarf an immer kleineren und leichteren Sekundärbatterien, die als Energiequelle für solche Geräte dienen, in den letzten Jahren rasant gestiegen.

Es hat sich gezeigt, dass sich insbesondere mit Lithiumsekundärbatterien hohe Energiedichten erreichen lassen. Dieser Typ von Sekundärbatterie zeichnet sich durch eine positive Elektrode aus, deren Aktivmaterial Lithiumionen reversibel einlagern und abgeben kann. Die Einlagerung der Lithiumionen erfolgt in bestimmte Schichten des Kristallgitters des Aktivmaterials und läuft umso effizienter ab, je weniger Störstellen die Schichtstruktur des Kristallgitters aufweist.

Als Aktivmaterial wird insbesondere LiCoO₂ erfolgreich eingesetzt. LiCoO₂ zeichnet sich durch eine sehr stabile Kristallstruktur aus und es lassen sich daraus Sekundärbatterien herstellen, in denen das LiCoO₂ bei einem mittleren Potential von 3,7 V eine Entladekapazität von etwa 150 mAh/g erreicht. Aufgrund der hohen Kosten für Kobalt wird intensiv nach alternativen Aktivmaterialien gesucht, die nach Möglichkeit zudem noch bessere Entladekapazitäten ermöglichen. Großes Interesse hat dabei LiNiO₂ erfahren, da sich gezeigt hat, dass bei Einsatz von LiNiO₂ Entladekapazitäten von mehr als 200 mAh/g erreicht werden können. LiNiO₂ ist jedoch deutlich anfälliger für das Entstehen von Defekten in der Kristallstruktur als LiCoO₂, so dass bei Einsatz von LiNiO₂ keine ausreichend hohe Zyklenstabilität resultiert.

Es wurde daher vorgeschlagen, als Aktivmaterial LiNiO₂ einzusetzen, das neben Nickel weitere Metalle enthält. Insbesondere die Dotierung mit Kobalt und Aluminium hat sich als vorteilhaft erwiesen. So erhöht die Dotierung mit Kobalt und Aluminium die thermische Stabilität. Aluminium trägt jedoch nicht zur Entladekapazität bei und sollte daher in so geringer Menge zugegeben werden, dass zwar die erwünschte Stabilitätserhöhung erreicht, unnötige Gewichtserhöhung aber vermieden wird. Dabei kommt es entscheidend darauf an, dass das Aluminium im Aktivmaterial homogen verteilt ist.

Bei der Herstellung der Aktivmaterialien wird in der Regel eine Lithiumverbindung mit Hydroxiden der gewünschten Metallkomponenten vermischt und geglüht. Die Homogenität der Verteilung der Metallkomponenten im Kristallgitter des Aktivmaterials hängt wesentlich davon ab, wie gut es gelingt, bereits in der zu glühenden Mischung eine homogene Verteilung der Bestandteile zu erreichen. Es hat sich gezeigt, dass das klassische Mischen und Mahlen von Lithiumverbindung, Nickelkomponente, Kobaltkomponente und Aluminiumkomponente nicht geeignet ist, große Mengen zuverlässig homogen zu mischen.

Es wurde daher bereits versucht, anstelle der einfachen Hydroxide der gewünschten Metallkomponenten Mischmetallhydroxide einzusetzen, in denen die Metalle bereits homogen verteilt sind. So lassen sich gemischte Nickel-Kobalt-Hydroxide, in denen die Metalle in einer festen Lösung homogen verteilt sind, durch Kofällung erhalten. Die Kofällung von Mischmetallhydroxiden, die Nickel und Aluminium enthalten, bereitet hingegen Schwierigkeiten, da mit steigender Menge an zugegebenem Aluminium die Filtrierbarkeit des entstehenden Kopräzipitats abnimmt und auch das Entfernen der Anionen der bei der Kofällung eingesetzten Metallsalze problematisch wird.

Daher schlägt JP 11-016752 A1 vor, von Nickelhydroxid bzw. einem Nickel-Kobalt-Hydroxid auszugehen und darauf Aluminiumhydroxid abzuscheiden. Dazu wird zunächst in einer das gegebenenfalls Kobalt-haltige Nickelhydroxid enthaltenden Suspension Alkalialuminat gelöst. Die dann stark alkalische Suspension wird durch tropfenweise Zugabe von Säure neutralisiert, wodurch Aluminiumhydroxid entsteht, das unter Vermischung und Adsorption auf der Oberfläche des Nickelhydroxids ausfällt. Dabei wird die Suspension intensiv gerührt. Nach Abschluss der Säurezugabe wird noch etwa 30 Minuten gerührt und anschließend der Niederschlag abfiltriert und getrocknet. Der so gewonnene Niederschlag wird in Wasser redispergiert, gewaschen und schließlich erneut getrocknet. Bedingt durch die lange Verweilzeit im Fällungsreaktor, die hohe Konzentration von Feststoff in der Suspension und das erforderliche intensive Rühren, werden die Partikel starker Reibung ausgesetzt, so dass die Gefahr besteht, dass es zum teilweisen Abrieb von bereits adsorbierten Aluminiumhydroxidpartikeln von der Oberfläche des Nickelhydroxids kommt. Die lange Verweilzeit im Fällungsreaktor und die sehr langsame Veränderung des pH-Werts durch Zutropfen einer Säure bedingen zudem, dass sich Aluminiumhydroxidpartikel unterschiedlicher Kristallstruktur bzw. -morphologie ausbilden. Die Sättigungskonzentration für die Aluminiumverbindung wird sehr langsam erreicht und überschritten, so dass sich vergleichsweise große Aluminiumhydroxidpartikel hoher Kristallinität ausbilden. Dies hat zur Folge, dass das Aluminium bei der anschließenden thermischen Umsetzung von Mischmetallhydroxid und Lithiumverbindung schlecht in den Kern der Mischmetallhydroxidpartikel eindiffundieren kann. Es besteht die Gefahr der Bildung unerwünschter Lithiumaluminat-Phasen, wie Li₅AlO₄ und LiAlO₂, und eine gleichmäßig homogene Verteilung von Aluminium im entstehenden Material ist nicht gewährleistet.

Auch JP 2001-106534 A1 offenbart gemischte Metallhydroxide, die als Ausgangsmaterial zur Herstellung von Aktivmaterial für die positive Elektrode einer Sekundärbatterie eingesetzt werden. Wiederum wird von kogefälltern Nickel-Kobalt-Hydroxid ausgegangen, das mit Aluminiumhydroxid beschichtet wird. Die Beschichtung erfolgt in einem Reaktionsturm durch Zugabe einer Aluminiumnitratlösung. Der pH-Wert wird schwach basisch eingestellt, so dass das Aluminiumnitrat in Aluminiumhydroxid überführt wird, das sich auf der Oberfläche des Nickel-Kobalt-Hydroxids abscheidet. Die Beschichtung erfolgt wiederum unter Rühren, so dass es auch bei diesem Vorgehen zu starker mechanischer Belastung der beschichteten Partikel kommt und die Gefahr des Ablösens des Aluminiumhydroxids von der Oberfläche des Nickel-Kobalt-Hydroxids besteht. Die Reaktionsbedingungen in einem gerührten Reaktionsturm bedingen wiederum eine lange Verweilzeit und die Bildung von Aluminiumhydroxidpartikeln hoher Kristallinität. Auch bei dem so gewonnenen Material kann das Aluminium also bei der anschließenden thermischen Umsetzung von Mischmetallhydroxid und Lithiumverbindung schlecht in den Kern der Mischmetallhydroxidpartikel eindiffundieren, so dass eine homogene Verteilung des Aluminiums im entstehenden Material nicht gewährleistet ist.

EP1044927A1 beschreibt verschiedene Ni(OH)₂-Materialien, welche als Vorstoff für Lithiummischmetalloxide, Kathodenaktivmaterialien für Li-Ionen-Batterien, zum Einsatz kommen. Die Besonderheit der beschriebenen Nickelhydroxide liegt in den groben Primärkörnern, welche eine dreieckige Form aufweisen und deren Seitenlängen sich zwischen 1 - 10 µm bewegen.

In einem der geschilderten Beispiele wird auch ein Nickelhydroxid beschrieben, welches mit einem gefällten Aluminiumhydroxid beschichtet wird. Die Beschichtung des Nickelhydroxides erfolgt in einem Reaktor durch die Zufuhr von wässrigen Aluminiumnitrat- und Natriumhydroxid-Lösungen.

Aufgabe der vorliegenden Erfindung ist es daher, Mischmetallhydroxide, enthaltend Nickel, Kobalt und Aluminium, zur Verfügung zu stellen, die sich zur Herstellung von Aktivmaterialien für positive Elektroden von Sekundärbatterien eignen, wobei die Metalle im Aktivmaterial homogen verteilt sind. Aufgabe der vorliegenden Erfindung ist es weiterhin ein wirtschaftliches Verfahren zur Herstellung solcher Mischmetallhydroxide anzugeben.

Die Aufgabe wird durch Mischmetallhydroxide gelöst, deren Partikel einen Kern aus Nickel-Kobalt-Hydroxid und eine Beschichtung aus amorphem Aluminiumhydroxid aufweisen.

Gegenstand der Erfindung ist daher ein Mischmetallhydroxid, enthaltend die Metalle Nickel, Kobalt und Aluminium, wobei das Mischmetallhydroxid pulverförmig vorliegt und die Pulverpartikel einen Kern aus Nickel-Kobalt-Hydroxid aufweisen, dessen Oberfläche mit amorphem Aluminiumhydroxid beschichtet ist.

Aufgrund der amorphen Struktur des Aluminiumhydroxids kann das Aluminium bei der thermischen Umsetzung einer Mischung aus erfindungsgemäßem Mischmetallhydroxid und einer Lithiumverbindung leicht in den Kern der Mischmetallhydroxidpartikel eindiffundieren. Im entstehenden Aktivmaterial für die positive Elektrode einer Sekundärbatterie ist das Aluminium daher sehr homogen verteilt.

Neben Nickel, Kobalt und Aluminium können die erfindungsgemäßen Mischmetallhydroxide weitere Metalle enthalten. So ist eine Dotierung mit einem oder mehreren der Metalle Titan, Vanadium, Chrom, Mangan, Eisen, Yttrium, Zirkonium und Molybdän möglich.

Vorzugsweise enthalten die erfindungsgemäßen Mischmetallhydroxide jedoch neben unvermeidlichen Verunreinigungen ausschließlich die Metalle Nickel, Kobalt und Aluminium. Besonders bevorzugt enthalten die Mischmetallhydroxide 50 bis 93 Mol-% Ni, 5 bis 30 Mol-% Co und 2 bis 20 Mol-% Al, jeweils bezogen auf die Gesamtmenge an Ni, Co und Al, wobei die Summe der Anteile von Ni, Co und Al 100 Mol-% beträgt. Insbesondere bevorzugt enthalten die Mischmetallhydroxide 70 bis 90 Mol-% Ni, 8 bis 20 Mol-% Co und 2 bis 10 Mol-% Al, jeweils bezogen auf die Gesamtmenge an Ni, Co und Al, wobei die Summe der Anteile von Ni, Co und Al 100 Mol-% beträgt. Als ganz besonders bevorzugte Zusammensetzungen seien 80 Mol-% Ni, 15 Mol-% Co und 5 Mol-% Al bzw. 82 Mol-% Ni, 15 Mol-% Co und 3 Mol-% Al genannt.

Erfindungsgemäß weisen die Partikel des Mischmetallhydroxids einen Kern aus Nickel-Kobalt-Hydroxid und eine Beschichtung aus amorphem Aluminiumhydroxid auf. Eine Beschichtung aus amorphem Aluminiumhydroxid liegt im Sinne dieser Erfindung dann vor, wenn das Mischmetallhydroxid in einer Röntgenbeugungsanalyse keine Signale einer kristallinen Aluminiumhydroxidphase aufweist, wobei die Röntgenbeugungsanalyse mit einem Phillips X'pert-MPD Diffraktometer mit folgenden Messparametern durchgeführt wird:

| | |
|---|---|
| Spannung: | 50 kV |
| Strom: | 40 mA |
| Anode: | Kupfer |
| Soller: | 0,04 rad |
| Divergenz-Blende: | 1° |
| Streustrahl-Blende: | 1° |
| Receiving-Spalt: | 0,2 mm |
| Schrittgröße: | 0,02° = 2Theta |
| Messzeit pro Schritt: | 0,5 s |

Das erfindungsgemäße Mischmetallhydroxid zeichnet sich insbesondere dadurch aus, dass in einer unter den oben angegebenen Bedingungen durchgeführten Röntgenbeugungsanalyse keine Signale bei 2Theta 27 - 28° und 40 - 41° detektiert werden. Diese Signale entsprechen kristallinem Aluminiumhydroxid der sehr üblichen Bayerit-Phase.

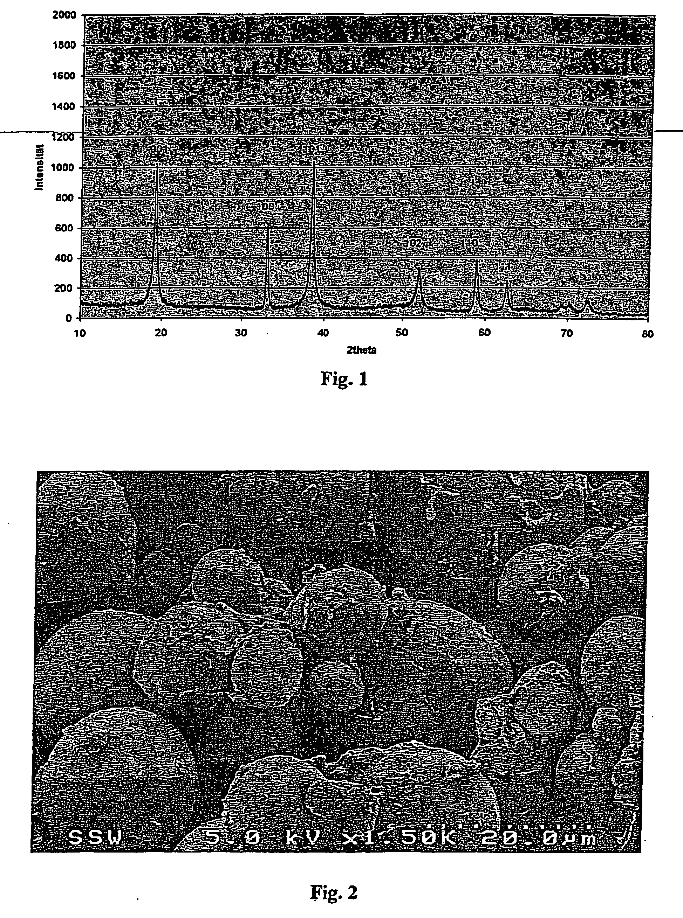

Fig. 1 zeigt beispielhaft ein Röntgenbeugungsspektrum eines erfindungsgemäßen Mischmetallhydroxids, das gemäß Beispiel 1 hergestellt wurde. Die Röntgenbeugungsanalyse wurde unter den oben angegebenen Bedingungen durchgeführt. Es ist deutlich zu erkennen, dass nur Signale erhalten werden, die der Kristallstruktur von phasenreinem Ni(OH)₂ entsprechen. Signale, die einer kristallinen Phase des Al(OH)₃ zugeordnet werden könnten, fehlen. Bei der Beschichtung handelt es sich demnach um amorphes Aluminiumhydroxid.

In der Regel weisen die erfindungsgemäßen Mischmetallhydroxide eine geschlossene Beschichtung aus Aluminiumhydroxid auf. Es ist jedoch nicht ausgeschlossen, dass ein Teil der Partikel des Mischmetallhydroxids eine Beschichtung aufweist, die nicht die gesamte Oberfläche des Kemmaterials bedeckt. Vorzugsweise weisen im erfindungsgemäßen Mischmetallhydroxid jedoch mindestens 90 % der Partikel eine Oberflächenbeschichtung mit amorphem Aluminiumhydroxid auf, die mindestens 90 % der Oberfläche des Kerns aus Nickel-Kobalt-Hydroxid bedeckt. Besonders bevorzugt weisen im erfindungsgemäßen Mischmetallhydroxid mindestens 95 % der Partikel eine Oberflächenbeschichtung mit amorphem Aluminiumhydroxid auf, die mindestens 95 % der Oberfläche des Kerns aus Nickel-Kobalt-Hydroxid bedeckt.

Fig. 2 zeigt beispielhaft eine mit einem Rasterelektronenmikroskop (REM) (1500-fache Vergrößerung) aufgenommene Abbildung eines erfmdungsgemäßen Mischmetallhydroxids, das gemäß Beispiel 1 hergestellt wurde. Die abgebildeten Teilchen weisen eine geschlossene und dichte Beschichtung mit amorphem Al(OH)₃ auf.

Vorzugsweise weisen die erfindungsgemäßen Mischmetallhydroxide eine spezifische Oberfläche (BET-Oberfläche) von 3 bis 30 m²/g auf, besonders bevorzugt von 5 bis 20 m²/g.

Die mittlere Partikelgröße D50, bestimmt gemäß ASTM B 822 an dem Messgerät MasterSizer Sµ der Firma Malvern, beträgt vorzugsweise 1 bis 30 µm, insbesondere bevorzugt 5 bis 20 µm.

Die Klopfdichte der erfindungsgemäßen Mischmetallhydroxide liegt vorzugsweise bei > 1,5 g/cm³, insbesondere bevorzugt bei > 1,8 g/cm³ und ganz besonders bevorzugt bei > 2,0 g/cm³.

Die Erfindung betrifft weiterhin ein effektives Verfahren zur Herstellung der erfindungsgemäßen Mischmetallhydroxide.

Gegenstand der Erfindung ist daher auch ein Verfahren zur Herstellung der erfindungsgemäßen Mischmetallhydroxide durch Fällung von Aluminiumhydroxid in Gegenwart von Kobalt-haltigem Nickelhydroxid, wobei
a) eine wässrige Suspension des Kobalt-haltigen Nickelhydroxids und eine wässrige Lösung eines Alkalialuminats kontinuierlich einem Rohrrektor zugeführt werden, und
b) die Mischung aus Suspension und Lösung beim Durchströmen des Rohrreaktors neutralisiert wird, wodurch das Alkalialuminat in Aluminiumhydroxid überführt wird.

Das erfindungsgemäße Verfahren erlaubt die zuverlässige Abscheidung von amorphem Al(OH)₃ auf der Oberfläche der Nickel-Kobalt-Hydroxid Partikel. Darüber hinaus zeichnet sich dieses Verfahren durch eine kontinuierliche Prozessführung und dadurch aus, dass die Partikel in einem Rohrreaktor nur geringer mechanischer Belastung ausgesetzt werden, so dass abgeschiedenes Aluminiumhydroxid nicht von der Oberfläche des Nickel-Kobalt-Hydroxids abgerieben wird.

Als Kobalt-haltiges Nickelhydroxid wird vorzugsweise solches eingesetzt, das mittels bekannter Kofällungsverfahren hergestellt wird. Beispielsweise kann eine Nickel- und eine Kobaltverbindung, etwa Nickelsulfat und Kobaltsulfat, in Wasser gelöst und anschließend durch Zugabe von Base, vorzugsweise durch Zugabe eines Gemischs von Ammoniak und Natriumhydroxid, das gewünschte gemischte Hydroxid kogefällt werden. Das kogefällte Kobalt-haltige Nickelhydroxid kann auf bekannte Art und Weise, beispielsweise durch Filtration, Waschen und Trocknen, aufgearbeitet werden. Das Kobalt-haltige Nickelhydroxid kann dann in Wasser suspendiert und weiter umgesetzt werden. Vorzugsweise wird im erfindungsgemäßen Verfahren jedoch von kogefälltem Kobalt-haltigen Nickelhydroxid ausgegangen, das nach der Kofällung ohne weitere Isolierung in einen Agglomerationstank überführt und aus diesem in den Rohrreaktor eingespeist wird. Bei diesem Vorgehen bleibt das kogefällte Kobalt-haltige Nickelhydroxid immer im wässrigen Medium, so dass sich ein separates Suspendieren erübrigt.

Das Mengenverhältnis von Nickel zu Kobalt im Kobalt-haltigen Nickelhydroxid kann in weiten Grenzen eingestellt werden und richtet sich nach der Zusammensetzung des gewünschten Aluminium-haltigen Mischmetallhydroxids. Vorzugsweise wird demnach Kobalt-haltiges Nickelhydroxid der Formel NiₓCo₁₋ₓ(OH)₂ eingesetzt, wobei x für 0,60 bis 0,95 steht.

Vorzugsweise enthält die wässrige Suspension des Kobalt-haltigen Nickelhydroxids das Kobalt-haltige Nickelhydroxid in einer Menge von 0,1 bis 1,8 mol/l, besonders bevorzugt in einer Menge von 0,2 bis 1,0 mol/l. Dieser vergleichsweise niedrige Feststoffanteil in der Suspension gewährleistet, dass Stöße und Reibung zwischen den Partikeln und damit die mechanische Belastung, die zu einem Abreiben von auf der Oberfläche der Feststoffpartikel abgeschiedenen Aluminiumhydroxidpartikeln führen kann, minimiert werden.

Die wässrige Lösung des Alkalialuminats enthält das Alkalialuminat vorzugsweise in einer Konzentration von 1 bis 10 mol/l, besonders bevorzugt in einer Konzentration von 2 bis 8 mol/l. Es kann ein beliebiges Alkalialuminat, beispielsweise Kaliumaluminat oder Natriumaluminat, oder auch eine Mischung verschiedener Alkalialuminate eingesetzt werden. Vorzugsweise kommt jedoch Natriumaluminat zum Einsatz.

Die eingesetzten Mengen an wässriger Suspension des Kobalt-haltigen Nickelhydroxids und Lösung des Alkalialuminats werden so gewählt, dass sich im Mischmetallhydroxid die gewünschte Stöchiometrie einstellt.

Die wässrige Suspension des Kobalt-haltigen Nickelhydroxids und die wässrige Lösung des Alkalialuminats werden kontinuierlich einem Rohrreaktor zugeführt.

Dabei wird vorzugsweise so vorgegangen, dass die Suspension des Kobalt-haltigen Nickelhydroxids über einen ersten Einlass in den Rohrreaktor eingespeist wird und die Zugabe der wässrigen Lösung des Alkalialuminats über einen zweiten Einlass erfolgt, der in Strömungsrichtung nach dem ersten Einlass angeordnet ist.

Es ist jedoch auch möglich, die wässrige Lösung des Alkalialuminats über einen ersten Einlass in den Rohrreaktor einzuspeisen und die Zugabe der Suspension des Kobalt-haltigen Nickelhydroxids über einen zweiten Einlass vorzunehmen, der in Strömungsrichtung nach dem ersten Einlass angeordnet ist. Es ist weiterhin möglich, die wässrige Lösung des Alkalialuminats und die Suspension des Kobalt-haltigen Nickelhydroxids gemeinsam in den Rohrreaktor einzuspeisen, wobei Lösung und Suspension entweder vor oder bei der Einspeisung vermischt werden.

Um eine möglichst homogene Abscheidung von Aluminiumhydroxid auf den Partikeln des Kobalt-haltigen Nickelhydroxids zu erreichen, ist es wichtig, dass die wässrige Lösung des Alkalialuminats und die Suspension des Kobalt-haltigen Nickelhydroxids vor der Neutralisation und damit vor Beginn der Fällungsreaktion homogen vermischt sind. Vorzugsweise sind im Rohrreaktor daher nach Einleiten der wässrigen Lösung des Alkalialuminats und der Suspension des Kobalt-haltigen Nickelhydroxids und noch vor oder kurz nach der Neutralisation Einbauten vorgesehen, die ein inniges Mischen von Lösung und Suspension gewährleisten. Dabei kann es sich beispielsweise um einfache statische Umleitbleche oder um Verjüngungen im Rohrreaktor handeln. Im Gegensatz zum bekannten Mischen der Komponenten mittels Rührer in einem Rührreaktor ist die mechanische Belastung der Partikel durch diese Maßnahmen nur gering.

Nach Einleiten der wässrigen Suspension des Kobalt-haltigen Nickelhydroxids und der wässrigen Lösung des Alkalialuminats in den Rohrreaktor ist die entstehende Mischung stark alkalisch und weist in der Regel einen pH-Wert bei Raumtemperatur von etwa 12 bis 14 auf. Um das gelöste Aluminat in Aluminiumhydroxid zu überführen, das dann aus der wässrigen Umgebung ausfällt und auf der Oberfläche des Kobalt-haltigen Nickelhydroxids abgeschieden wird, ist es notwendig, die Mischung zu neutralisieren.

Die Neutralisation der Mischung aus der Suspension des Kobalt-haltigen Nickelhydroxids und der Lösung des Alkalialuminats erfolgt durch Zugabe einer Säure, wobei vorzugsweise Schwefelsäure zum Einsatz kommt. Besonders bevorzugt wird 20 Gew.-%ige Schwefelsäure eingesetzt.

Vorzugsweise wird die Säure kontinuierlich über einen Einlass in den Rohrreaktor eingeleitet, der sich an einer Stelle des Rohrreaktors befindet, an der die Suspension des Kobalt-haltigen Nickelhydroxids und die Lösung des Alkalialuminats bereits vollständig vermischt sind.

Vorzugsweise ist demnach der Einlass der Säure in Strömungsrichtung nach dem Einlass für das Kobalt-haltige Nickelhydroxid und dem Einlass für die Lösung des Alkalialuminats angeordnet.

Die Säure wird vorzugsweise in einer solchen Menge eingeleitet, dass die Reaktionsmischung nach Einspeisung der Säure in den Rohrreaktor einen pH-Wert bei Reaktionstemperatur von 7 bis 8,5 aufweist, besonders bevorzugt in einer solchen Menge, dass sich ein pH-Wert bei Reaktionstemperatur von 7 bis 7,5 einstellt. Bei diesem pH-Wert wird ein hoher Grad an Übersättigung des sich bildenden Aluminiumhydroxids erreicht, so dass die einzelnen Aluminiumhydroxid-Partikel ausfallen, bevor sich hochgeordnete kristalline Phasen ausgebildet haben.

Auch die verfahrensbedingt kurze Verweilzeit von in der Regel unter 5 Minuten im Rohrreaktor trägt dazu bei, dass das Aluminiumhydroxid in Form kleinster amorpher Partikel vorliegt, so dass sich die gewünschte Beschichtung der Kobalt-haltigen Nickelhydroxid-Partikel mit amorphem Aluminiumhydroxid ergibt. Vorzugsweise beträgt die Verweilzeit der Fällungsmischung im Rohrreaktor nach Zugabe der Säure 10 bis 180 Sekunden, besonders bevorzugt 30 bis 60 Sekunden.

Ein entscheidender Vorteil der Beschichtung in einem Rohrreaktor im Vergleich zur herkömmlichen Verfahrensführung in einem Rührreaktor besteht zudem darin, dass sich im Rohrreaktor eine Pfropfenströmung ausbildet und somit für die einzelnen Partikel eine annähernd identische Verweilzeit im Reaktionsraum resultiert. Die Kobalt-haltigen Nickelhydroxid-Partikel werden daher sehr gleichmäßig mit annähernd identischer Menge Aluminiumhydroxid beschichtet, was die homogene Verteilung des Aluminiums im Mischmetallhydroxid und im daraus hergestellten Aktivmaterial für positive Elektroden von Sekundärbatterien fordert.

Die Temperatur, bei der das erfindungsgemäße Verfahren durchgeführt wird, kann in weiten Grenzen variieren. Mit steigender Temperatur wird jedoch die Ausbildung unerwünschter kristalliner Aluminiumhydroxid-Phasen begünstigt. Sehr hohe Temperaturen sind daher nachteilig.

Vorzugsweise wird daher bei einer Temperatur von 10 bis 60 °C, besonders bevorzugt bei einer Temperatur von 20 bis 50 °C gearbeitet.

Das erhaltene Mischmetallhydroxid kann über bekannte Prozessschritte aus der wässrigen Umgebung abgetrennt und aufgearbeitet werden. In der Regel wird die den Rohrreaktor verlassende Suspension zunächst filtriert und gewaschen. Die Filtration kann beispielsweise über eine Filternutsche, aber auch über kontinuierlich arbeitende Filtrationsapparaturen, etwa einen Bandfilter, erfolgen. Das so abgetrennte Mischmetallhydroxid wird dann in der Regel ein oder mehrmals mit destilliertem Wasser gewaschen.

Es folgt in der Regel ein Trocknungsschritt. Dabei hat es sich als vorteilhaft erwiesen, Trocknungsmethoden einzusetzen, in denen das zu trocknende Material nur einer sehr kurzen Temperaturbehandlung ausgesetzt wird. Beispielhaft seien Sprühtrocknung, Trocknen im Heißluftstromtrockner und Trocknung in einem Spin-flash Trockner genannt.

Die erfindungsgemäßen Mischmetallhydroxide eignen sich hervorragend zur Herstellung von Aktivmaterialien für positive Elektroden für Sekundärbatterien, da sich Aktivmaterialien erhalten lassen, die sich durch eine sehr homogene Verteilung der Metallkomponenten auszeichnen.

Gegenstand der Erfindung ist daher weiterhin die Verwendung eines erfindungsgemäßen Mischmetallhydroxids zur Herstellung einer Ausgangszusammensetzung für ein Aktivmaterial für positive Elektroden einer Sekundärbatterie, wobei das Mischmetallhydroxid mit einer Lithiumverbindung versetzt und vermischt wird.

Als Lithiumverbindung eignet sich beispielsweise Lithiumnitrat, Lithiumhydroxid, Lithiumcarbonat oder Mischungen davon. Vorzugsweise wird als Lithiumverbindung Lithiumhydroxid eingesetzt.

Die Menge an Lithiumverbindung richtet sich nach der Stöchiometrie des gewünschten Aktivmaterials. In der Regel wird die Lithiumverbindung in einer solchen Menge eingesetzt, dass das Molverhältnis von Lithium zur Summe der übrigen Metalle, d.h. in der Regel zur Summe an Nickel, Kobalt und Aluminium, 0,9 bis 1,1 beträgt. Vorzugsweise wird die Lithiumverbindung in einer solchen Menge eingesetzt, dass das Molverhältnis von Lithium zur Summe der übrigen Metalle, d.h. in der Regel zur Summe an Nickel, Kobalt und Aluminium, 0,95 bis 1,05 beträgt.

Gegenstand der Erfindung ist weiterhin die Verwendung eines erfindungsgemäßen Mischmetallhydroxids zur Herstellung eines Aktivmaterials für positive Elektroden einer Sekundärbatterie, wobei das Mischmetallhydroxid wie oben beschrieben mit einer Lithiumverbindung versetzt und vermischt und die so gewonnene Ausgangszusammensetzung in sauerstoffhaltiger Atmosphäre bei einer Temperatur von 450 bis 900 °C kalziniert wird. Vorzugsweise erfolgt die Kalzination bei einer Temperatur von 600 bis 800 °C. Die Kalzinationsdauer hängt im Wesentlichen von der gewählten Kalzinationstemperatur ab und beträgt in der Regel 5 bis 50 Stunden.

Das so gewonnene Aktivmaterial für positive Elektroden einer Sekundärbatterie kann in bekannter Art und Weise zu entsprechenden positiven Elektroden weiterverarbeitet werden. Beispielsweise wird das Aktivmaterial mit Acetylen Ruß als Leitsatz und PTFE (Polytetrafluorethylen) als Bindemittel im gewünschten Mengenverhältnis vermischt. Die entstehende Mischung wird mit einem definierten Druck zu einem Elektrodenfilm formgepresst und anschließend bei beispielsweise 200°C für etwa 24 Stunden getrocknet.

Gegenstand der Erfindung ist des Weiteren die Verwendung eines Aktivmaterials nach Anspruch 11 für die Herstellung einer positiven Elektrode oder für die Herstellung einer Sekundärbatterie.

Die Erfindung betrifft ferner eine Ausgangszusammensetzung für ein Aktivmaterial für positive Elektroden einer Sekundärbatterie, die eine Mischung aus einer Lithiumverbindung und einem Mischmetallhydroxid nach Anspruch 1 oder 2 ist.

Die Erfindung betrifft des Weiteren ein Aktivmaterial für positive Elektroden einer Sekundärbatterie, das durch Kalzinieren einer Ausgangszusammensetzung nach Anspruch 13 in einer sauerstoffhaltigen Atmosphäre bei einer Temperatur von 450 bis 900°C gewinnbar ist.

Die Erfindung betrifft des Weiteren eine positive Elektrode, die aus einem Aktivmaterial nach Anspruch 14 gewinnbar ist, sowie eine Sekundärbatterie, die eine positive Elektrode nach Anspruch 15 umfasst.

Die folgenden Beispiele dienen der näheren Erläuterung der Erfindung, wobei die Beispiele das Verständnis des erfindungsgemäßen Prinzips erleichtern sollen, und nicht als Einschränkung desselben zu verstehen sind.

### Beispiele

Soweit nicht anders angegeben, handelt es sich bei den Prozentangaben um Gewichtsprozent (Gew.-%).

### Beispiel 1

Eine Suspension eines frisch gefällten Nickel-Kobalthydroxids mit einem D50-Wert von 14,8 µm und einem molaren Ni/Co-Verhältnis von 5,3 wurde kontinuierlich aus dem Fällreaktor in einen Vorlagebehälter überführt. Die Konzentration an Nickel-Kobalthydroxid in der Suspension betrug 120 g/l. Die Suspension enthielt weiterhin Natriumsulfat in einer Konzentration von 180 g/l, Ammoniak in einer Konzentration von etwa 11 g/l und den Überschuss der bei der Fällung des Nickel-Kobalthydroxids eingesetzten Natronlauge. Bei der vorliegenden Temperatur der Suspension von 37°C betrug der pH-Wert der Suspension etwa 12,5.

Aus dem Vorlagebehälter wurde die Suspension über einen Überlauf in einen direkt an den Überlauf angeschlossenen Rohrreaktor überführt, welcher einen Durchmesser von 2,54 cm (1 Zoll) aufweist. Der Volumenstrom der Suspension betrug 550 l/h. Der Rohrreaktor weist drei in Strömungsrichtung der Suspension nacheinander angebrachte Zulaufstutzen auf, wobei die Zulaufstutzen 1, 2 und 3 in dieser Reihenfolge in Strömungsrichtung der Suspension immer weiter von der Einlaufstelle der Suspension entfernt angebracht sind. Über den dem Suspensionseinlauf nachgeschalteten Zulaufstutzen 1 wurden zur Verdünnung der Suspension 1100 l/h an vollentionisiertem Wasser (VE-Wasser) zugegeben. Über den dem Zulaufstutzen 1 nachfolgenden Zulaufstutzen 2 wurden 5 1/h einer Natriumaluminat-Lösung in den Rohrreaktor eingebracht, wobei die Aluminium-Konzentration in der Natriumaluminat-Lösung 210 g/l betrug. Nach der Natriumaluminat-Zugabe durchlief die Suspension zwecks Homogenisierung einen ersten im Rohrreaktor befindlichen statischen Mischer. Über den in Strömungsrichtung der Suspension nach dem statischen Mischer angeordneten Zulaufstutzen 3 wurde die zur Ausfällung von Al(OH)₃ notwendige Menge an 20%-iger Schwefelsäure in den Rohrreaktor eingespeist. Die Zugabe an Schwefelsäure wurde so dosiert, dass sich ein pH-Wert von 7,0 - 8,0 im Rohrreaktor einstellte. Nach der Schwefelsäure-Zugabe durchlief die Suspension erneut einen statischen Mischer, um den Stoffaustausch zwischen den einzelnen Suspensionsbestandteilen zu intensivieren und eine homogene Beschichtung des Nickel-Kobalt-Hydroxids mit Aluminiumhydroxid erreichen zu können. Die Verweilzeit der Suspension im Rohrreaktor betrug nach Zugabe der Schwefelsäure noch 30 Sekunden. Anschließend wurde die Suspension auf einen Bandtrockner gefahren, auf welchem die Waschung des beschichteten Kopräzipitats mit VE-Wasser erfolgte. Nach der Waschung erfolgte die Trocknung des Materials in einem Spin-Flash-Trockner.

Das auf diese Weise mit amorphem Aluminiumhydroxid beschichtete NiCo(OH)₂ wies einen molaren Al-Gehalt von 5 mol-% bezogen auf die Gesamtmetallmenge an Ni, Co und Al auf. Ein Vergleich der rasterelektronenmikroskopischen Aufnahmen (REM-Aufnahmen) von unbeschichtetem und beschichtetem Material belegt, dass das NiCo(OH)₂ homogen beschichtet wurde. Fig. 2 zeigt das erhaltene Mischmetallhydroxid (1500-fache Vergrößerung). Die Partikel weisen eine geschlossene und dichte Beschichtung mit amorphem Al(OH)₃ auf.

Der D50-Wert des erhaltenen Mischmetallhydroxids entsprach dem des Basismaterials und betrug 14,7 µm. Dies zeigt, dass es bei der Beschichtung nicht zum Abrieb von Aluminiumhydroxid gekommen ist Wäre es in nennenswertem Umfang zu solch unerwünschtem Abrieb gekommen, würde das abgeriebene Aluminiumhydroxid in Form sehr feiner Partikel neben dem Mischmetallhydroxid vorliegen. Das Vorliegen einer Fraktion sehr feiner Partikel hätte zu einer deutlichen Abnahme des D50-Werts geführt. Die Klopfdichte des erhaltenen Mischmetallhydroxids betrug 2,1 g/cm³.

Das erhaltene Mischmetallhydroxid wurde mittels Röntgenbeugungsanalyse (RBA) untersucht, wobei mit einem Phillips X'pert-MPD Diffraktometer mit folgenden Messparametern gearbeitet wurde:

| | |
|---|---|
| Spannung: | 50 kV |
| Strom: | 40 mA |
| Anode: | Kupfer |
| Soller: | 0,04 rad |
| Divergenz-Blende: | 1° |
| Streustrahl-Blende: | 1° |
| Receiving-Spalt: | 0,2 mm |
| Schrittgröße: | 0,02° = 2Theta |
| Messzeit pro Schritt: | 0,5 s |

Fig. 1 zeigt das entsprechende Röntgenbeugungsspektrum. Es konnten nur Signale detektiert werden, die der Kristallstruktur von phasenreinem Ni(OH)₂ entsprechen. Signale, die einer kristallinen Phase des Al(OH)₃ zugeordnet werden könnten, fehlen. Bei der Beschichtung handelt es sich demnach um amorphes Aluminiumhydroxid.

## Patentansprüche

1. Mischmetallhydroxid, enthaltend die Metalle Nickel, Kobalt und Aluminium, **dadurch gekennzeichnet, dass** das Mischmetallhydroxid pulverförmig vorliegt, wobei die Pulverpartikel einen Kern aus Nickel-Kobalt-Hydroxid aufweisen, dessen Oberfläche mit amorphem Aluminiumhydroxid beschichtet ist.

2. Mischmetallhydroxid gemäß Anspruch 1, **dadurch gekennzeichnet, dass** das Mischmetallhydroxid 50 bis 93 Mol-% Ni, 5 bis 30 Mol-% Co und 2 bis 20 Mol-% Al, jeweils bezogen auf die Gesamtmenge an Ni, Co und Al, enthält.

3. Verfahren zur Herstellung von Mischmetallhydroxiden gemäß Anspruch 1 oder 2 durch Fällung von Aluminiumhydroxid in Gegenwart von kobalthaltigem Nickelhydroxid,
**dadurch gekennzeichnet, dass**
a) eine wässrige Suspension des kobalthaltigen Nickelhydroxids und eine wässrige Lösung eines Alkalialuminats kontinuierlich einem Rohrrektor zugeführt werden, und
b) die Mischung aus Suspension und Lösung beim Durchströmen des Rohrreaktors neutralisiert wird, wodurch das Alkalialuminat in Aluminiumhydroxid überführt wird, und die Verweilzeit der wässrigen suspension im Rohrreaktor weniger als 5 minuten beträgt.

4. Verfahren nach Anspruch 3, **dadurch gekennzeichnet, dass** die wässrige Suspension des kobalthaltigen Nickelhydroxids das kobalthaltige Nickelhydroxid in einer Menge von 0,1 bis 1,8 mol/l enthält.

5. Verfahren nach einem der Ansprüche 3 bis 4, **dadurch gekennzeichnet, dass** die wässrige Lösung des Alkalialuminats das Alkalialuminat in einer Konzentration von 1 bis 10 mol/l enthält.

6. Verfahren nach einem der Ansprüche 3 bis 5, **dadurch gekennzeichnet, dass** als Alkalialuminat Natriumaluminat eingesetzt wird.

7. Verfahren nach einem der Ansprüche 3 bis 6, **dadurch gekennzeichnet, dass** die Suspension des kobalthaltigen Nickelhydroxids über einen ersten Einlass in den Rohrreaktor eingespeist wird und die Zugabe der wässrigen Lösung des Alkalialuminats über einen zweiten Einlass erfolgt, der in Strömungsrichtung nach dem ersten Einlass angeordnet ist.

8. Verfahren nach einem der Ansprüche 3 bis 7, **dadurch gekennzeichnet, dass** die Neutralisation der Mischung aus der Suspension des kobalthaltigen Nickelhydroxids und der Lösung des Alkalialuminats durch Zugabe einer Säure in den Rohrreaktor über einen Einlass erfolgt, der sich an einer Stelle des Rohrreaktors befindet, an der die Suspension des kobalthaltigen Nickelhydroxids und die Lösung des Alkalialuminats bereits vollständig vermischt sind.

9. Verfahren nach Anspruch 8, **dadurch gekennzeichnet, dass** die Säure in einer solchen Menge eingeleitet wird, dass die Reaktionsmischung nach Einspeisung der Säure in den Rohrreaktor einen pH-Wert bei Reaktionstemperatur von 7 bis 8,5 aufweist.

10. Verwendung eines Mischmctallhydroxids gemäß eines der Ansprüche 1 oder 2 zur Herstellung einer Ausgangszusammensetzung für ein Aktivmaterial für positive Elektroden einer Sekundärbatterie, **dadurch gekennzeichnet, dass** das Mischmetallhydroxid mit einer Lithiumverbindung versetzt und vermischt wird.

11. Verwendung eines Mischmetallhydroxids gemäß eines der Ansprüche 1 oder 2 zur Herstellung eines Aktivmaterials für positive Elektroden einer Sekundärbatterie, **dadurch gekennzeichnet, dass** das Mischmetallhydroxid mit einer Lithiumverbindung versetzt und vermischt und die so gewonnene Ausgangszusammensetzung in sauerstoffhaltiger Atmosphäre bei einer Temperatur von 450 bis 900 °C kalziniert wird.

12. Verwendung eines Aktivmaterials nach Anspruch 11 für die Herstellung einer positiven Elektrode oder für die Herstellung einer Sekundärbatterie.

13. Ausgangszusammensetzung für ein Aktivmaterial für positive Elektroden einer Sekundärbatterie, die eine Mischung aus einer Lithiumverbindung und einem Mischmetallhydroxid nach Anspruch 1 oder 2 ist.

14. Aktivmaterial für positive Elektroden einer Sekundärbatterie, das durch Kalzinieren einer Ausgangszusammensetzung nach Anspruch 13 in einer sauerstoffhaltigen Atmosphäre bei einer Temperatur von 450 bis 900°C gewinnbar ist.

15. Positive Elektrode, die aus einem Aktivmaterial nach Anspruch 14 gewinnbar ist.

16. Sekundärbatterie, die eine positive Elektrode nach Anspruch 15 umfasst.

## Claims

1. Mixed metal hydroxide comprising the metals nickel, cobalt and aluminium, **characterized in that** the mixed metal hydroxide is in pulverulent form, with the powder particles having a core of nickel/cobalt hydroxide, the surface of which is coated with amorphous aluminium hydroxide.

2. Mixed metal hydroxide according to claim 1, **characterized in that** the mixed metal hydroxide contains 50 to 93 mol% Ni, 5 to 30 mol% Co and 2 to 20 mol% Al, in each case based on the total amount of Ni, Co and Al.

3. Process for the preparation of mixed metal hydroxides according to claim 1 or 2 by precipitation of aluminium hydroxide in the presence of cobalt-containing nickel hydroxide, **characterized in that**
a) an aqueous suspension of the cobalt-containing nickel hydroxide and an aqueous solution of an alkali metal aluminate are fed continuously to a tube reactor, and
b) the mixture of suspension and solution is neutralized on flowing through the tube reactor, as a result of which the alkali metal aluminate is converted into aluminium hydroxide, and the dwell time of the aqueous suspension in the tube reactor amounts to less than 5 minutes.

4. Process according to claim 3, **characterized in that** the aqueous suspension of the cobalt-containing nickel hydroxide contains the cobalt-containing nickel hydroxide in an amount of 0.1 to 1.8 mol/l.

5. Process according to one of claims 3 to 4 **characterized in that** the aqueous solution of the alkali metal aluminate contains the alkali metal aluminate in a concentration of 1 to 10 mol/l.

6. Process according to one of claims 3 to 5, **characterized in that** sodium aluminate is employed as the alkali metal aluminate.

7. Process according to one of claims 3 to 6, **characterized in that** the suspension of the cobalt-containing nickel hydroxide is fed into the tube reactor via a first intake and the addition of the aqueous solution of the alkali metal aluminate takes place via a second intake arranged in the direction of flow downstream of the first intake.

8. Process according to one of claims 3 to 7, **characterized in that** the neutralization of the mixture of the suspension of the cobalt-containing nickel hydroxide and the solution of the alkali metal aluminate is carried out by addition of an acid into the tube reactor via an intake which is at a point of the tube reactor at which the suspension of the cobalt-containing nickel hydroxide and the solution of the alkali metal aluminate are already mixed completely.

9. Process according to claim 8, **characterized in that** the acid is passed into the reactor in an amount such that after the acid has been fed into the tube reactor, the reaction mixture has a pH at the reaction temperature of from 7 to 8.5.

10. Use of a mixed metal hydroxide according to one of claims 1 or 2 for the preparation of a starting composition for an active material for positive electrodes of a secondary battery, **characterized in that** a lithium compound is added to and mixed with the mixed metal hydroxide.

11. Use of a mixed metal hydroxide according to one of claims 1 or 2 for the preparation of an active material for positive electrodes of a secondary battery, **characterized in that** a lithium compound is added to and mixed with the mixed metal hydroxide and the starting composition obtained in this way is calcined in an oxygen-containing atmosphere at a temperature of from 450 to 900°C.

12. Use of an active material as defined in claim 11 for the preparation of a positive electrode or for the preparation of a secondary battery.

13. A starting composition for an active material for positive electrodes of a secondary battery which is a mixture of a lithium compound and a mixed metal hydroxide according to either claim 1 or claim 2.

14. An active material for positive electrodes of a secondary battery which is obtainable by calcining a starting composition as defined in claim 13 in an oxygen-containing atmosphere at a temperature of from 450 to 900°C.

15. A positive electrode which is obtainable from an active material according to claim 14.

16. A secondary battery which comprises a positive electrode as defined in claim 15.

## Revendications

1. Hydroxyde métallique mixte contenant les métaux nickel, cobalt et aluminium **caractérisé en ce que** l'hydroxyde métallique mixte est pulvérulent, où les particules de poudre comportent un noyau en hydroxyde de nickel et de cobalt dont la surface est recouverte d'hydroxyde d'aluminium amorphe.

2. Hydroxyde métallique mixte selon la revendication 1 **caractérisé en ce que** l'hydroxyde métallique mixte contient 50 à 93 mol % de Ni, 5 à 30 mol % de Co et 2 à 20 mol % de Al, à chaque fois rapporté à la quantité totale de Ni, Co et Al.

3. Procédé de production d'hydroxydes métalliques mixtes selon la revendication 1 ou 2 par précipitation d'hydroxyde d'aluminium en présence d'hydroxyde de nickel contentant du cobalt **caractérisé en ce que**
a) une suspension aqueuse de l'hydroxyde de nickel contenant du cobalt et une solution aqueuse d'un aluminate alcalin sont introduites en continu dans un réacteur tubulaire, et
b) le mélange de suspension et de solution est neutralisé lors de la traversée du réacteur tubulaire, de sorte que l'aluminate alcalin est converti en hydroxyde d'aluminium, et le temps de séjour de la suspension aqueuse dans le réacteur tubulaire est inférieur à 5 min.

4. Procédé selon la revendication 3 **caractérisé en ce que** la suspension aqueuse de l'hydroxyde de nickel contenant du cobalt contient l'hydroxyde du nickel contenant du cobalt en une quantité de 0,1 à 1,8 mol/l.

5. Procédé selon l'une des revendications 3 à 4 **caractérisé en ce que** la solution aqueuse de l'aluminate alcalin contient l'aluminate alcalin en une concentration de 1 à 10 mol/l.

6. Procédé selon l'une des revendications 3 à 5 **caractérisé en ce que** l'aluminate de sodium est utilisé comme aluminate alcalin.

7. Procédé selon l'une des revendications 3 à 6 **caractérisé en ce que** la suspension de l'hydroxyde de nickel contenant du cobalt est introduite dans le réacteur tubulaire par une première entrée et l'addition de la solution aqueuse d'aluminate alcalin a lieu par une seconde entrée qui est disposée après la première entrée dans la direction de l'écoulement.

8. Procédé selon l'une des revendications 3 à 7 **caractérisé en ce que** la neutralisation du mélange de la suspension de l'hydroxyde de nickel contenant du cobalt et de la solution de l'aluminate alcalin a lieu par addition d'un acide dans le réacteur tubulaire par une entrée qui se trouve dans une position du réacteur tubulaire à laquelle la suspension de l'hydroxyde de nickel contenant du cobalt et la solution de l'aluminate alcalin sont déjà totalement mélangées.

9. Procédé selon la revendication 8 **caractérisé en ce que** l'acide est introduit en une quantité telle que le mélange réactionnel après l'introduction de l'acide dans le réacteur tubulaire présente un pH à la température de réaction de 7 à 8,5.

10. Utilisation d'un hydroxyde métallique mixte selon l'une des revendications 1 ou 2 pour la production d'une composition de départ pour une matière active pour électrodes positives d'une batterie secondaire **caractérisée en ce que** l'hydroxyde métallique mixte est additionné d'un composé du lithium et mélangé avec celui-ci.

11. Utilisation d'un hydroxyde métallique mixte selon l'une des revendications 1 ou 2 pour la production d'une matière active pour électrodes positives d'une batterie secondaire **caractérisée en ce que** l'hydroxyde métallique mixte est additionné d'un composé du lithium et mélangé avec celui-ci et la composition de départ ainsi obtenue est calcinée dans une atmosphère contenant de l'oxygène à une température de 450 à 900°C.

12. Utilisation d'une matière active selon la revendication 11 pour la production d'une électrode positive ou pour la production d'une batterie secondaire.

13. Composition de départ pour une matière active pour électrodes positives d'une batterie secondaire qui est un mélange d'un composé du lithium et d'un hydroxyde métallique mixte selon la revendication 1 ou 2.

14. Matière active pour électrodes positives d'une batterie secondaire qui peut être obtenue par calcination d'une composition de départ selon la revendication 13 dans une atmosphère contenant de l'oxygène à une température de 450 à 900°C.

15. Electrode positive qui peut être obtenue à partir d'une matière active selon la revendication 14.

16. Batterie secondaire qui comprend une électrode positive selon la revendication 15.
